# FASCICULE DE BREVET EUROPEEN

(11) **EP 1 336 843 B1**
(45) Date de publication et mention de la délivrance du brevet: **02.04.2008**
(21) Numéro de dépôt: 03290280.1
(22) Date de dépôt: 04.02.2003
(51) Int. Cl.: G01N 30/52, B01D 15/08

(54) **Protection du lit chromatographique dans les dispositifs de chromatographie à compression axiale dynamique**
Schutz eines chromatographischen Bettes in Chromatographievorrichtungen mit dynamischer axialer Kompression
Protection of a chromatographic bed in chromatography devices with dynamic axial compression

(30) Priorité: 15.02.2002 FR 0201911
(43) Date de publication de la demande: 20.08.2003
(73) Titulaire: Novasep, 54340 Pompey (FR)
(72) Inventeur: Hauck Wilhelm, Wallingfort, PA 19086 (US); Marks, Harlene, Wallingfort, PA 19086 (US); Blehaut,Jean, Bryn Mawr, PA 19010 (US); Nicoud, Roger-Marc, 54690 Lay-Saint-Christophe (FR)
(74) Mandataire: Hirsch & Associés

(56) Documents cités:
- EP-A- 0 145 578
- FR-A- 2 219 797
- US-A- 5 242 586
- US-A- 5 641 893

## Description

### DOMAINE DE L'INVENTION

La présente invention se rapporte à la protection du lit chromatographique dans des dispositifs de chromatographie et en particulier dans les dispositifs à compression axiale dynamique.

### ARRIERE-PLAN TECHNOLOGIQUE

Dans un procédé de séparation par chromatographie, l'efficacité de la colonne utilisée est un paramètre clef. La colonne est généralement remplie avec un produit solide sous forme de grains très fins habituellement d'une taille comprise entre 5 et 100µm, formant le lit chromatographique. Afin d'obtenir une efficacité élevée, l'arrangement des grains à l'intérieur de la colonne doit être le plus homogène possible et de plus, il faut éviter des volumes vides entre le lit chromatographique et les entrées-sorties de la colonne. Il est connu de l'art antérieur de recourir à des colonnes à Compression Axiale Dynamique afin d'assurer l'existence d'un lit compact, sans espace libre entre les distributeurs d'entrée-sortie et le lit.

Les colonnes à Compression Axiale Dynamique (DAC) présentent un piston ou autre corps coulissant mû par un vérin actionné par exemple par un circuit hydraulique indépendant ; le corps coulissant permet de tasser le garnissage dans une chambre entre ce piston et un fond fixe ou couvercle amovible. Le corps coulissant rentre en contact avec la phase solide afin de garder une pression mécanique constante sur le lit.

Ainsi, on connaît de la demande de brevet français FR-A-2 219 797 un appareil de chromatographie se présentant sous forme d'une colonne destinée à contenir un lit en matière adsorbante. L'appareil est constitué d'un tube comprenant un couvercle et un corps coulissant dans le tube permettant d'exercer une pression dans le tube. Le corps coulissant est un piston comportant à sa tête une plaque poreuse perméable aux fluides. Pour obtenir le lit destiné à la chromatographie, on introduit dans le tube démuni de son couvercle, une suspension de particules d'une matière susceptible de constituer un lit adsorbant. On adapte le couvercle au tube, puis on exerce une pression sur ladite suspension au moyen du piston. Le liquide est refoulé à travers les plaques poreuses, et lesdites particules sont comprimées entre le piston et le couvercle. Cet appareil permet d'atteindre, dans un exemple d'exécution, le stade de compression du lit choisi et le tassement des particules désiré quand le corps coulissant a parcouru entre 4/5 et 2/3 de la hauteur de la colonne.

Cet appareil comporte toutefois l'inconvénient de parvenir à un tassement imprécis du lit, puisqu'il est évalué par la seule position du piston le long du tube. D'autre part, la pression exercée par le piston risque d'être supérieure aux contraintes mécaniques que le lit supporte et le contact entre le lit et le piston peut provoquer une dégradation du lit. D'autre part, cet appareil ne permet pas de tenir compte des risques d'écrasement du lit par le piston pouvant engendrer une dégradation du lit.

On connaît également de la demande de brevet européen EP-A-0 145 578 un appareil de chromatographie comprenant un tube dont une partie est destinée à contenir un lit adsorbant. Ce tube comporte deux parois d'extrémité et un piston coulissant longitudinalement dans le tube. Le piston marque entre les deux parois d'extrémité une séparation entre une chambre chromatographique contenant le lit et une enceinte dans laquelle règne une pression de sorte à déplacer le piston le long du tube. La particularité de ce dispositif est que le fluide contenu dans l'enceinte est du liquide à chromatographier dérivé depuis le conduit d'arrivée de celui-ci. Une partie du liquide est dérivée vers l'enceinte par un conduit d'enceinte et l'autre partie du liquide est entraîné vers la chambre chromatographique par un conduit d'écoulement traversant l'enceinte et le piston. A l'équilibre du piston, la force exercée du côté de l'enceinte sur le piston est égale à la somme de la force sur le piston provoquée par l'écoulement du liquide dans la chambre à chromatographier et de la force mécanique du lit sur le piston.

Cet appareil permet, outre d'effectuer l'étape d'élution, de définir la pression exercée sur le lit.

Dans un premier mode de réalisation, le piston a une section constante mais la pression dans les conduits d'écoulement et d'enceinte est régulée par des taquets détendeurs. Ainsi on peut tarer les taquets de sorte que la différence des pressions exercées par l'écoulement du liquide et par le liquide dans l'enceinte soit ajustée à une pression de consigne sur le lit.

Dans un autre mode de réalisation, la pression dans les conduits d'écoulement et d'enceinte est la même mais la section du piston varie. Le piston est à deux sections coulissant dans des alésages correspondants, la section la plus petite A étant située du côté de la chambre chromatographique et la section la plus grande B du côté de l'enceinte. Du fait de la différence de surface des faces A et B du piston, la force exercée en B est supérieure à la force exercée en A. Ainsi on peut choisir les sections du piston de sorte que la différence des pressions exercées par l'écoulement du liquide et par le liquide dans l'enceinte soit ajustée à une pression de consigne sur le lit.

En fait, l'appareil décrit dans le document ci-dessus présente divers inconvénients. Il ne permet pas de connaître la position du piston le long du tube ce qui peut engendrer l'écrasement du lit. Ceci est particulièrement grave lorsque l'on craint un risque de dégradation mécanique du lit chromatographique. De plus, les mouvements du lit chromatographique n'étant pas surveillés et l'enceinte ne pouvant pas refouler du liquide, cet appareil ne peut pas adapter la pression exercée sur le lit en fonction des mouvements de celui-ci et le contact entre le lit et le piston peut provoquer une dégradation du lit. D'autre part, ce système ne peut pas être utilisé en SMB (Simulated Moving Bed) ou en VARICOL. Dans de telles configurations, les appareils de chromatographie sont montés en boucle et les liquides injectés dans les lits alternent. Dans l'appareil décrit dans EP-A-0 145 578, le même liquide est envoyé dans le lit et dans l'enceinte, l'alternance d'injection de liquides engendrant un mélange de ceux-ci.

Le document US-A-5 641 893 montre un appareil pour la surveillance d'un procédé de séparation dans une colonne de chromatographie; l'appareil comporte une colonne segmentée avec un joint positionné entre les segments. Un capteur pour surveiller une substance de l'éluant est introduit à travers le joint.

Le document US-A-5 242 586 montre un système de protection d'une colonne de chromatographie comprenant des détecteurs pour surveiller certains paramètres du système, tels qu'une surpression dans le tube de fourniture de liquide.

### RESUME DE L'INVENTION

La présente invention a pour objet un dispositif de chromatographie dans lequel l'efficacité de la colonne est améliorée tout en assurant une protection du lit chromatographique.

L'invention se rapporte à un dispositif de chromatographie comme dans la revendication 1.

La sonde peut être fixe sur l'extrémité. Alternativement, la sonde peut être susceptible d'opérer des mouvements d'oscillations par rapport à l'extrémité.

Typiquement, la sonde est saillante dans la couche. La sonde peut être une sonde capacitive.

Le dispositif peut comprendre en outre une deuxième sonde de détection de la surface du lit, la deuxième sonde étant montée sur l'extrémité de la colonne délimitant la couche. De préférence, la première sonde est décalée en saillie dans la couche par rapport à la deuxième sonde.

L'invention concerne également un ensemble de dispositifs de chromatographie tels que décrit précédemment dans le cadre de l'invention, dans lequel les dispositifs sont associés en boucle.

L'invention se rapporte par ailleurs à des procédés de séparation et de réglage suivants :

Un procédé de séparation d'au moins deux composés d'un fluide à chromatographier comprenant la chromatographie dudit fluide dans le dispositif tel que décrit précédemment dans le cadre de l'invention, le procédé comprenant les étapes :
- écoulement du fluide à chromatographier à travers le lit,
- collecte du fluide chromatographié.

Selon une variante du procédé de séparation précédant dans le dispositif décrit précédemment dans le cadre de l'invention avec une sonde, le piston étant l'extrémité délimitant la couche, le procédé comprend les étapes :
- écoulement du fluide à chromatographier à travers le lit,
- montée du piston lorsque la sonde détecte la surface du lit,
- descente du piston lorsque la sonde ne détecte plus la surface du lit,
- collecte du fluide chromatographié.

Selon une autre variante du procédé de séparation précédant, dans le dispositif décrit précédemment dans le cadre de l'invention avec une sonde, le piston étant l'extrémité inférieure de la colonne, le procédé comprend les étapes:
- écoulement du fluide à chromatographier à travers le lit,
- descente du piston lorsque la sonde détecte la surface du lit,
- montée du piston lorsque la sonde ne détecte plus la surface du lit,
- collecte du fluide chromatographié.

Selon une autre variante du procédé de séparation précédant, dans le dispositif décrit précédemment dans le cadre de l'invention avec deux sondes, le piston étant l'extrémité délimitant la couche, le procédé comprend les étapes :
- écoulement du fluide à chromatographier à travers le lit,
- montée du piston lorsque les sondes détectent la surface du lit,
- descente du piston lorsque aucune sonde ne détecte la surface du lit,
- collecte du fluide chromatographié.

Selon une autre variante du procédé de séparation précédant, dans le dispositif décrit précédemment dans le cadre de l'invention avec deux sondes, le piston étant l'extrémité inférieure de la colonne, le procédé comprend les étapes :
- écoulement du fluide à chromatographier à travers le lit,
- descente du piston lorsque les sondes détectent la surface du lit,
- montée du piston lorsque aucune sonde ne détecte la surface du lit,
- collecte du fluide chromatographié.

Un procédé de réglage de la position du piston dans le dispositif décrit précédemment dans le cadre de l'invention avec une sonde, le piston étant l'extrémité délimitant la couche, le procédé comprenant les étapes :
- montée du piston lorsque la sonde détecte la surface du lit,
- descente du piston lorsque la sonde ne détecte plus la surface du lit.

Un procédé de réglage de la position du piston dans le dispositif décrit précédemment dans le cadre de l'invention avec une sonde, le piston étant l'extrémité inférieure de la colonne, le procédé comprenant les étapes :
- descente du piston lorsque la sonde détecte la surface du lit,
- montée du piston lorsque la sonde ne détecte plus la surface du lit.

Les procédés de réglage précédents dans le dispositif avec une sonde peuvent comprendre en outre l'étape d'oscillation de la sonde.

Un procédé de réglage de la position du piston dans le dispositif décrit précédemment dans le cadre de l'invention avec deux sondes, le piston étant l'extrémité délimitant la couche, le procédé comprenant les étapes :
- montée du piston lorsque les sondes détectent la surface du lit,
- descente du piston lorsque aucune sonde ne détecte la surface du lit.

Un procédé de réglage de la position du piston dans le dispositif décrit précédemment dans le cadre de l'invention avec deux sondes, le piston étant l'extrémité inférieure de la colonne, le procédé comprenant les étapes :
- descente du piston lorsque les sondes détectent la surface du lit,
- montée du piston lorsque aucune sonde ne détecte la surface du lit.

Le dispositif de l'invention permet le recours à des lits chromatographiques sensibles à la pression, et en particulier qui ne permettent pas que le piston de la colonne rentre en contact avec eux. Le dispositif permet de conserver un écart entre le piston et la surface du lit. Pour cela, le dispositif adapte la position du piston en fonction de la surface du lit, tout en limitant le volume au-dessus du lit et ainsi de limiter la dispersion pour conserver l'efficacité du lit. Enfin le dispositif permet de séparer efficacement les composés du fluide à chromatographier tout en assurant la protection du lit.

### BREVE DESCRIPTION DES DESSINS

D'autres caractéristiques et avantages de l'invention apparaîtront à la lecture de la description détaillée qui suit des modes de réalisation de l'invention, donnés à titre d'exemple uniquement et en références aux dessins qui montrent :
- figure 1, un dispositif de chromatographie selon l'invention,
- les figures 2 à 5, des modes de réalisation du dispositif de la figure 1.

### DESCRIPTION DE L'INVENTION

Le dispositif décrit par la suite permet d'effectuer la chromatographie d'un fluide.

Le dispositif 10 de chromatographie comprend une colonne 12 avec une extrémité 16a supérieure et une extrémité 16b inférieure. La colonne 12 est destinée à recevoir entre ses deux extrémités 16a, 16b un lit chromatographique 14 et le fluide à chromatographier. L'extrémité 16a de la colonne 12 et une surface du lit 14 délimitent une couche 48 de fluide. Un piston 36 coulisse dans la colonne 12. Le piston 36 est l'une des extrémités 16a, 16b de la colonne 12. Le dispositif comprend en outre au moins une première sonde 45 de détection de la surface du lit 14. La sonde 45 est montée sur l'extrémité 16a de la colonne 12 délimitant la couche 48. Le dispositif comprend également des moyens 52 de réglage de la position du piston 36 en fonction de la détection de la surface du lit 14 par la sonde 45.

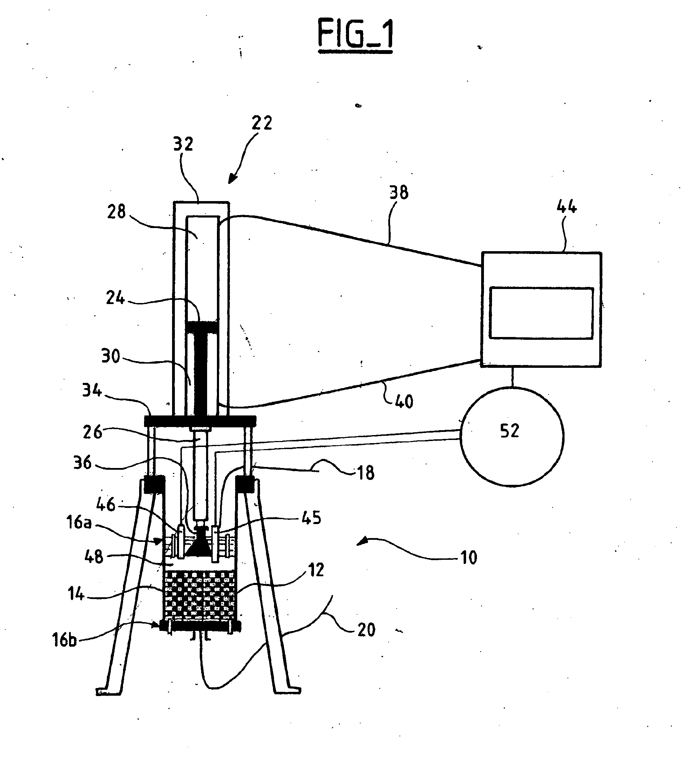

La figure 1 représente schématiquement le dispositif de chromatographie 10.

Le lit chromatographique 14 repose sur l'extrémité 16b inférieure de la colonne 12. Le lit 14 utilisé est par exemple du gel pour biochromatographie, des résines échangeuses d'ions, des phases chirales à base de polymères. Selon le type de lit utilisé, les contraintes maximales supportées sont, par exemple, de 1 à 3 bars.

Le fluide à chromatographier pénètre dans la colonne 12 par l'une des extrémités 16a, 16b et en ressort par l'autre extrémité. Le fluide est conduit et collecté de la colonne 12 respectivement par des conduits 18, 20 ou inversement.

Le piston 36 est l'une ou l'autre des extrémités 16a, 16b de la colonne 12. Lorsque le piston 36 est l'extrémité 16a supérieure de la colonne 12 (figure 1), il forme le couvercle de la colonne 12 et l'extrémité 16b inférieure est le fond de la colonne 12. Le lit 14 repose sur le fond de la colonne et le piston 36 peut coulisser de sorte à se rapprocher ou à s'écarter de la surface supérieure du lit. Lorsque le piston 36 est l'extrémité 16b inférieure de la colonne 12, il forme le fond de la colonne 12 et l'extrémité 16a supérieure de la colonne 12 est le couvercle. Le lit 14 repose alors sur le piston 36. Le piston 36 et le lit 14 coulissent de sorte à rapprocher ou à écarter la surface supérieure du lit 14 du couvercle de la colonne 12.

Au cours de la chromatographie, le lit 14 peut gonfler ou se rétracter ; en conséquence, l'épaisseur du lit 14 varie. Lorsque le lit 14 gonfle, la compression du lit 14 entre les deux extrémités 16a, 16b peut augmenter de telle sorte que le lit se détériore ; inversement, lorsque le lit 14 se rétracte, le tassement du lit est modifié, l'espace entre le lit et l'extrémité est augmenté et le dispositif de chromatographie perd de son efficacité. Le piston 36 adapte alors la hauteur de la colonne 12 en fonction de l'épaisseur du lit 14. Le piston permet de protéger le lit chromatographique 14 contre des pressions supérieures à la résistance mécanique du lit 14, tout en assurant la qualité de la chromatographie par le dispositif.

Pour protéger le lit 14, le dispositif de chromatographie empêche le lit 14 d'être comprimé en contact avec les deux extrémités 16a, 16b de la colonne 12, l'une des extrémités étant le piston 36. Pour cela, le volume dans la colonne 12 entre les extrémités 16a, 16b est supérieur au volume occupé par le lit 14. Le fluide à chromatographier pénétrant dans la colonne 12 remplit alors la différence de volume. En conséquence, le fluide à chromatographier qui s'écoule dans la colonne 12 à travers le lit 14, forme une couche 48 ; la couche est délimitée entre une des extrémités 16a, 16b et la surface supérieure du lit 14. Ceci permet de protéger le lit contre des risques d'écrasement et contre des contraintes mécaniques supérieures à celles que le lit 14 supporte.

La première sonde 45 détecte la surface supérieure du lit 14. La première sonde 45 est montée sur l'extrémité 16a qui délimite la couche 48 de sorte à détecter la position de la surface du lit 14 par rapport à l'extrémité 16a supérieure de la colonne 12. Lorsque le piston 36 est l'extrémité 16a de la colonne 12 (figure 1), la première sonde 45 est montée sur le piston 36. Lorsque le piston 36 est l'extrémité 16b de la colonne 12, la première sonde 45 est par exemple montée sur le couvercle de la colonne 12. En fonction de la détection de la surface du lit 14 par la sonde 45, les moyens 52 de réglage règlent la position du piston 36. Ceci présente l'avantage d'obtenir un réglage automatique de la position du piston 36 par rapport au lit 14 en fonction des mouvements détectés de ce dernier. La sonde 45 montée sur l'extrémité 16a de la colonne 12 permet par ailleurs une construction simplifiée de la colonne 12, notamment sans fenêtre de visualisation à travers la colonne 12.

Dans le mode de réalisation de la figure 1, le dispositif 10 comprend en outre une deuxième sonde 46 de détection de la surface du lit 14. La sonde 46 est montée sur l'extrémité 16a de la colonne 12. De préférence les sondes 45 et 46 sont les mêmes de sorte à faciliter le traitement des informations fournies par les sondes. La sonde 46 peut être utilisée pour détecter un dysfonctionnement de la première sonde 45. Elle peut aussi être utilisée pour compléter la détection de la surface du lit 14 par la sonde 45.

Les sondes 45, 46 peuvent être montées de manière fixe sur l'extrémité 16a de la colonne. Le montage fixe présente l'avantage d'une construction simplifiée de l'extrémité 16a. Alternativement, les sondes 45, 46 peuvent être montées de manière mobile sur l'extrémité 16a de la colonne 12 ; les sondes 45, 46 sont susceptibles d'opérer des mouvements d'oscillation par rapport à l'extrémité 16a. Ceci présente l'avantage de détecter plus précisément la position de la surface du lit, et de pouvoir encore mieux ajuster la position du piston par rapport au lit pour le protéger et en tirer toutes ses qualités.

Avantageusement, les sondes 45, 46 sont en saillie dans la couche 48. Ceci permet d'améliorer la détection des mouvements du lit 14. Les sondes 45, 46 peuvent être décalées en saillie dans la couche 48.

La détection de la surface du lit par la sonde peut être effectuée par contact entre les sondes et la surface du lit. Toutefois, de manière avantageuse, la détection de la surface du lit peut être effectuée sans contact entre les sondes et la surface du lit, la sonde étant alors calibrée de sorte à détecter la « proximité » de la surface du lit. Ceci présente l'avantage d'éviter tout contact avec le lit, ce qui augmente sa protection.

La nature des sondes 45, 46 va maintenant être expliquée. Dans un mode de réalisation, les sondes 45, 46 sont des sondes capacitives. Ces sondes sont isolées électriquement du milieu les entourant. Elles contiennent un condensateur dont la capacité change avec la constante diélectrique du milieu autour des sondes. Par exemple, tant que les sondes 45, 46 sont en contact avec le fluide à chromatographier, la valeur de la capacité du condensateur demeure identique. Lorsque le lit gonfle, les sondes 45, 46 se rapprochent de la surface du lit 14. Comme le fluide a une constante diélectrique différente de celle du solide, la constante diélectrique du milieu entourant les sondes 45, 46 change. La détection de la surface du lit par les sondes peut être effectuée par contact entre les sondes et la surface du lit. Toutefois, de manière avantageuse, la détection de la surface du lit peut être effectuée sans contact entre les sondes et la surface du lit. En effet, à l'approche de la surface du lit, la constante diélectrique de la couche 48 change, et ce changement est détecté par les sondes. Ceci présente l'avantage d'éviter tout contact avec le lit, ce qui augmente sa protection. Le changement de la constante diélectrique est détecté par les sondes 45, 46 et ainsi transformé en un signal de détection de la surface du lit 14. Le signal fourni par les sondes 45, 46 est par exemple un signal tout ou rien, c'est-à-dire, soit la surface du lit 14 est détectée soit elle n'est pas détectée. Alternativement, les sondes fournissent des signaux en continue de la constante diélectrique du milieu.

Les moyens 52 de réglage comprennent, par exemple, un régulateur du type à action Proportionnelle Intégrale, Proportionnelle Différentielle ou Proportionnelle Intégrale Différentielle. Ce type de régulateur permet d'ajuster la position du piston .

Sur la figure 1, le déplacement du piston 36 dans la colonne 12 est effectué de la manière suivante. Selon le mode de réalisation décrit, le piston 36 est l'extrémité 16a. Le dispositif 10 comprend un vérin 22. Le vérin 22 comporte un piston mobile 24 relié à une extrémité d'une tige 26. Le piston 24 délimite deux chambres 28 et 30 dans le vérin 22. La première chambre 28, ou chambre supérieure, est délimitée entre le piston 24 et la paroi supérieure 32 du vérin 22. La deuxième chambre 30, ou chambre inférieure, est délimitée entre le piston 24 et la paroi inférieure 34 du vérin 22. La paroi inférieure 34 marque la séparation entre le vérin 22 et la colonne 12. La tige 26 reliée au piston 24 se trouve dans la chambre inférieure 30 et débouche dans la colonne 12 en traversant la paroi inférieure 34 du vérin 22. Des joints appropriés seront utilisés pour assurer l'étanchéité entre la chambre 30 et la colonne 12. L'autre extrémité de la tige 26 se trouvant dans la colonne 12 est reliée au piston 36. Une source 44 de liquide hydraulique alimente le vérin 22 par des conduits 38, 40. Lorsque les moyens de réglage 52 donnent l'ordre de monter le piston 36, la pression dans la chambre 30 est rendue supérieure à la pression dans la chambre 28. Lorsque les moyens de réglage 52 donnent l'ordre de descendre le piston 36, la pression dans la chambre 28 est rendue supérieure à la pression dans la chambre 30.

Selon un autre mode de réalisation, le piston 36 est l'extrémité 16b et le vérin 22 est positionné sous la colonne 12.

Le dispositif selon l'invention permet de réaliser des procédés de séparation d'au moins deux composés d'un fluide à chromatographier et/ou de réglage de la position du piston dans le dispositif. Ces procédés permettent de tirer toutes les qualités du lit 14 tout en assurant la protection de ce dernier contre des contraintes mécaniques supérieures à celles que le lit 14 supporte.

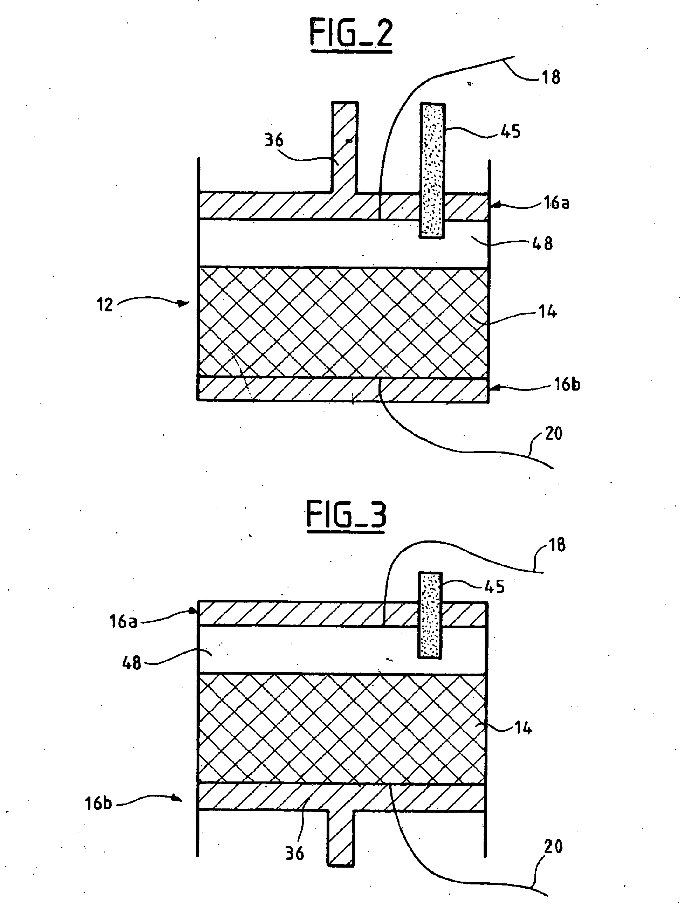

Ces procédés vont maintenant être décrits en référence aux figures 2 à 5.

Référence est faite à la figure 2. La figure montre un mode de réalisation du dispositif de chromatographie comprenant une sonde 45 montée sur le piston 36 formant l'extrémité 16a de la colonne 12.

Le positionnement initial du dispositif est le suivant. Le lit 14 est déposé dans la colonne 12, sur l'extrémité 16b de celle-ci. Le piston 36 est ensuite introduit dans la colonne 12. Le piston 36 muni de la sonde 45 est descendu jusqu'à ce que la sonde 45 détecte la surface du lit 14, avant que le piston 36 ne rentre en contact avec la surface du lit 14. Un volume mort est délimité entre le piston 36 et la surface du lit 14.

Le procédé de séparation d'au moins deux composés du fluide à chromatographier dans le dispositif 10 est le suivant. Le fluide est conduit par un conduit 18 jusqu'à l'extrémité 16a. Le fluide remplit le volume mort de sorte à constituer la couche 48 entre la surface du lit 14 et le piston 36. Le fluide constituant la couche 48 s'écoule à travers le lit 14, alors que la couche 48 est renouvelée par le fluide provenant du conduit 18. Après avoir traversé le lit 14, le fluide est collecté à l'extrémité 16b de la colonne 12 et est évacué par un conduit 20. La présence de la couche 48 empêche le piston 36 de rentrer en contact avec le lit, ce qui permet de le protéger.

Dans un autre mode de réalisation, le procédé de séparation est effectué de la manière suivante : le fluide est conduit par le conduit 20 vers l'extrémité 16b de la colonne 12. Il traverse ensuite le lit 14 ainsi que la couche 48. Le fluide est enfin collecté à l'extrémité 16a de la colonne 12 occupée par le piston 36 puis évacué par le conduit 18. Par la présence de la couche 48 entre la surface du lit 14 et le piston 36, le lit est protégé du contact avec le piston.

Le procédé de réglage de la position du piston 36 dans le dispositif 10 comprenant la sonde 45 fixe sur l'extrémité 16a de la colonne 12 est le suivant. Le piston effectue alors des mouvements d'oscillations permettant à la sonde de détecter la surface du lit. Au cours du procédé de séparation, le fluide constituant la couche 48, s'écoule à travers le lit 14. A une fréquence prédéterminée (la fréquence de réponse de la sonde 45 peut varier entre quelques milli-secondes et quelques centaines de milli-secondes), la sonde 45 fournit un signal sur la position de la surface du lit 14. La détermination de la fréquence de mesure par la sonde 45 est effectuée en fonction du temps caractéristique de mouvement du lit 14. La fréquence de mouvement du lit peut varier entre quelques minutes et quelques heures. La fréquence de mesure de la sonde 45 est supérieure au temps caractéristique de mouvement du lit 14. Ainsi, la position du piston est modifiée avant que le lit 14 ne rentre en contact avec le piston 36 et de sorte à conserver un écart constant entre le lit et le piston (par exemple entre 1 et 20 mm, de préférence entre 2 et 7 mm). Si la sonde détecte la surface du lit 14, par exemple lorsque le lit gonfle, les moyens de réglages 52 donnent l'ordre de monter le piston 36. Si la sonde 45 ne détecte pas la surface du lit 14, par exemple lorsque le lit 14 se rétracte en cas de perte de charge dans le lit 14, les moyens de réglage 52 donnent l'ordre de descendre le piston 36. De manière continue, le dispositif 10 de chromatographie adapte la position du piston aux mouvements du lit 14. Ceci permet de protéger le lit, tout en assurant la qualité de la séparation du fluide.

Le procédé de réglage peut aussi être effectué avec le dispositif 10 par des oscillations de la sonde 45. Pendant toute la durée de l'écoulement du fluide dans la colonne et de la séparation du fluide, la sonde 45 opère des mouvements d'oscillations pour détecter la position de la surface du lit 14 à une fréquence supérieure au temps caractéristique de mouvement du lit 14 (temps caractéristique du mouvement du lit : quelques minutes à quelques heures). La sonde 45 effectue un aller-retour entre une position initiale et une position d'extension. La position initiale est celle qui est la plus éloignée de la surface du lit ; la position d'extension est celle dans laquelle la sonde est la plus proche de la surface supérieure du lit 14 dans la couche 48. Si au cours de l'oscillation la sonde 45 détecte la surface du lit 14, ordre est donné par les moyens de réglage de monter le piston 36. Si la surface du lit 14 n'est pas détectée, ordre est donné par les moyens de réglage de descendre le piston 36. Ainsi, lorsque le lit a gonflé, le piston est monté pour protéger le lit 14 contre des contraintes mécaniques supérieures à celles que le lit 14 supporte ; si le lit 14 se rétracte, le piston est descendu pour assurer le tassement optimal du lit et la qualité de la chromatographie. L'avantage des oscillations de la sonde 45 est que le coulissement du piston 36 est effectué après que la sonde a fourni une information sur la détection ou la non-détection de la surface du lit 14. La protection du lit et la qualité de la séparation en sont améliorées.

Référence est faite à la figure 3. La figure montre un mode de réalisation du dispositif de chromatographie comprenant une sonde 45 montée sur l'extrémité 16a de la colonne 12, le piston 36 étant l'extrémité 16b inférieure de la colonne 12.

Le positionnement initial du dispositif 10 est le suivant. Le piston 36 est positionné dans la colonne 12 de sorte à former l'extrémité 16b inférieur de la colonne 12. Le lit 14 est déposé au fond de la colonne, contre le piston 36 puis la colonne 12 est fermée avec l'extrémité 16a, un couvercle par exemple, portant la sonde 45. Le piston 36 et le lit 14 sont ensuite montés jusqu'à ce que la sonde 45 détecte la surface du lit 14, avant que l'extrémité 16a ne rentre en contact avec la surface du lit 14. Un volume mort est délimité entre le piston 36 et la surface du lit.

Le fluide est introduit et extrait de la colonne 12 respectivement par les conduits 18 et 20 ou inversement.

Le procédé de séparation d'au moins deux composés du fluide à chromatographier dans le dispositif 10 et les avantages sont les mêmes que ceux décrits dans le cas de la figure 2.

Les procédés de réglage avec ou sans oscillation de la sonde 45 sont les mêmes que ceux décrits dans le cas de la figure 2. La différence est que lorsque la sonde 45 détecte la surface du lit 14, ordre est donné par les moyens 52 de réglage de descendre le piston 36 entraînant avec lui le lit 14 ; lorsque la sonde 45 ne détecte pas la surface du lit 14, ordre est donné par les moyens 52 de réglage de monter le piston 36, entraînant avec lui le lit 14. Dans ce mode de réalisation, soit le piston 36 soit la sonde fait le mouvement d'oscillation par rapport au couvercle. Il est aussi envisageable que le piston 36 et la sonde 45 fassent le mouvement d'oscillation. Les avantages sont ceux décrits dans le cas de la figure 2.

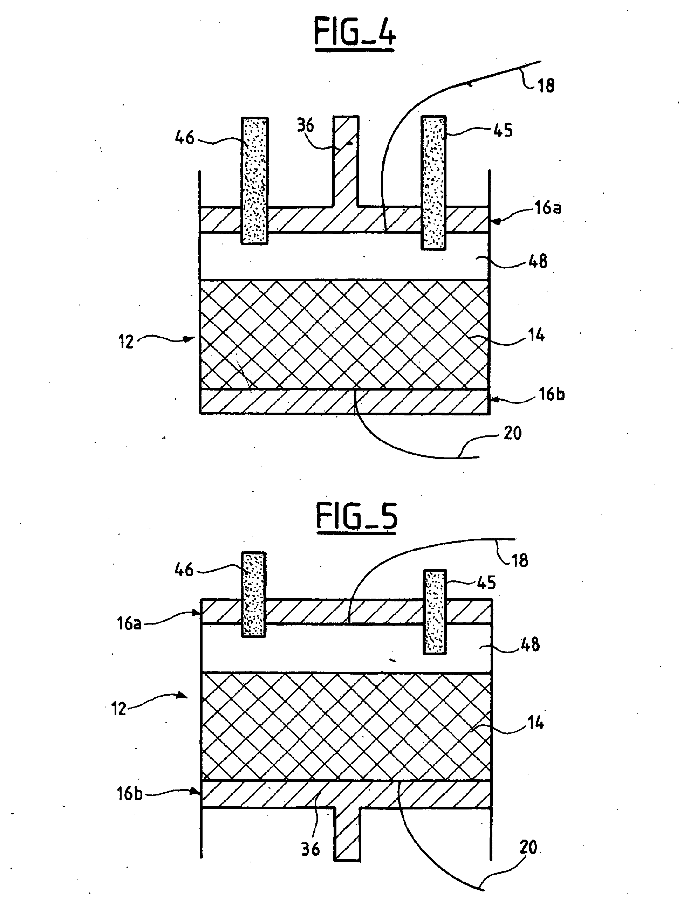

Référence est faite à la figure 4. La figure 4 montre un autre mode de réalisation du dispositif de chromatographie comprenant deux sondes 45, 46 montées sur le piston 36 formant l'extrémité 16a de la colonne 12. De préférence, les sondes 45, 46 sont décalées en saillie dans la couche 48 ; à titre d'exemple, la sonde 45 est plus en saillie dans la couche.

Le positionnement initial du dispositif est le suivant. Le lit 14 est déposé dans la colonne 12, sur l'extrémité 16b de celle-ci. Le piston 36 est ensuite introduit dans la colonne 12. Le piston 36 muni des sondes 45, 46 est descendu jusqu'à ce que la sonde 45 détecte la surface du lit 14, avant que le piston 36 ne rentre en contact avec la surface du lit 14. Un volume mort est délimité entre le piston 36 et la surface du lit 14.

Le procédé de séparation d'au moins deux composés du fluide à chromatographier dans le dispositif 10 ainsi que les avantages sont les mêmes que ceux décrits dans le cas de la figure 2.

Le procédé de réglage de la position du piston 36 dans le dispositif 10 comprenant deux sondes 45, 46 fixes sur l'extrémité 16a de la colonne 12 est le suivant. Le piston effectue des mouvements d'oscillations permettant aux sondes de détecter la surface du lit. Au cours du procédé de séparation, le fluide constituant la couche 48, s'écoule à travers le lit 14. A une fréquence prédéterminée (la fréquence de réponse des sondes 45, 46 peut varier entre quelques milli-secondes et quelques centaines de milli-secondes), les sondes 45, 46 fournissent un signal sur la position de la surface du lit 14. La détermination de la fréquence de mesure par les sondes 45, 46 est effectuée en fonction du temps caractéristique de mouvement du lit 14. La fréquence de mouvement du lit peut varier entre quelques minutes et quelques heures. La fréquence de mesure des sondes 45, 46 est supérieure au temps caractéristique de mouvement du lit 14. Ainsi, la position du piston est modifiée avant que le lit 14 ne rentre en contact avec le piston 36 et de sorte à conserver un écart constant entre le lit et le piston (par exemple entre 1 et 20 mm, de préférence entre 2 et 7 mm). Si les deux sondes 45, 46 détectent la surface du lit 14, par exemple lorsque le lit gonfle, les moyens de réglages 52 donnent l'ordre de monter le piston 36. Si aucune des sondes 45, 46 ne détecte la surface du lit 14, par exemple lorsque le lit 14 se rétracte en cas de perte de charge dans le lit 14, les moyens de réglage 52 donnent l'ordre de descendre le piston 36. Si la sonde 45 détecte la surface du lit 14 alors que la sonde 46 ne détecte pas la surface du lit 14, les moyens 52 de réglage ne donnent pas d'ordre de mouvement du piston. Le décalage en saillie des sondes 45, 46 permet d'encadrer la surface du lit 14 dans une position où le tassement est optimal pour la qualité de la séparation et où le lit est protégé contre des pressions supérieures à la résistance mécanique du lit 14. Plus le décalage en saillie des sondes 45, 46 est faible, plus la position de la surface du lit 14 est définie de manière optimale. De manière continue, le dispositif 10 de chromatographie adapte la position du piston aux mouvements du lit 14. Ceci permet de protéger le lit tout en assurant la qualité de la séparation du fluide.

Le procédé de réglage peut aussi être effectué avec le dispositif 10 par des oscillations des sondes 45, 46. Pendant toute la durée de l'écoulement du fluide dans la colonne et de la séparation du fluide, les sondes 45, 46 opèrent des mouvements d'oscillations pour détecter la position de la surface du lit 14 à une fréquence supérieure au temps caractéristique de mouvement du lit 14 (temps caractéristique du mouvement du lit : quelques minutes à quelques heures). Les sondes 45, 46 effectuent un aller-retour entre une position initiale et une position d'extension. La position initiale est celle qui est la plus éloignée de la surface du lit ; la position d'extension est celle dans laquelle les sondes sont les plus proches de la surface supérieure du lit 14 dans la couche 48. Si au cours de l'oscillation les deux sondes 45, 46 détectent la surface du lit 14, par exemple lorsque le lit gonfle, les moyens de réglages 52 donnent l'ordre de monter le piston 36. Si aucune des sondes 45, 46 ne détecte la surface du lit 14, par exemple lorsque le lit 14 se contracte en cas de perte de charge dans le lit 14, les moyens de réglage 52 donnent l'ordre de descendre le piston 36. Si la sonde 45 détecte la surface du lit 14 alors que la sonde 46 ne détecte pas la surface du lit 14, les moyens 52 de réglage ne donnent pas d'ordre de mouvement du piston. Ainsi, lorsque le lit a gonflé, le piston est monté pour protéger le lit 14 contre des contraintes mécaniques supérieures à celles que le lit 14 supporte ; si le lit 14 se rétracte, le piston est descendu pour assurer le tassement optimal du lit et la qualité de la chromatographie. Les avantages obtenus sont les mêmes que pour le procédé de réglage sans oscillation des sondes. L'avantage des oscillations des sondes 45, 46 est que le coulissement du piston 36 est effectué après que les sondes ont fourni une information sur la détection ou la non-détection de la surface du lit 14. La protection du lit et la qualité de la séparation en sont améliorées.

Référence est faite à la figure 5. La figure 5 montre un autre mode de réalisation du dispositif de chromatographie comprenant deux sondes 45, 46 montées sur l'extrémité 16a de la colonne 12, le piston 36 étant l'extrémité 16b. De préférence, les sondes 45, 46 sont décalées en saillie dans la couche 48 ; à titre d'exemple, la sonde 45 est plus en saillie dans la couche.

Le positionnement initial du dispositif 10 est le suivant. Le piston 36 est positionné dans la colonne 12 de sorte à former l'extrémité 16b inférieur de la colonne 12. Le lit 14 est déposé au fond de la colonne, contre le piston 36 puis la colonne 12 est fermée avec l'extrémité 16a, un couvercle par exemple, portant les sondes 45, 46. Le piston 36 est ensuite monté jusqu'à ce que la sonde 45 détecte la surface du lit 14, avant que l'extrémité 16a ne rentre en contact avec la surface du lit 14. Un volume mort est délimité entre le piston 36 et la surface du lit 14.

Le procédé de séparation d'au moins deux composés du fluide à chromatographier dans le dispositif 10 et les avantages sont les mêmes que ceux décrits dans le cas de la figure 4.

Les procédés de réglage avec ou sans oscillation des sondes 45, 46 et les avantages sont les mêmes que ceux décrits dans le cas de la figure 4. La différence est que lorsque les sondes 45, 46 détectent la surface du lit 14, ordre est donné par les moyens 52 de réglage de descendre le piston 36 entraînant avec lui le lit 14 ; lorsque les sondes 45, 46 ne détectent pas la surface du lit 14, ordre est donné par les moyens 52 de réglage de monter le piston 36, entraînant avec lui le lit 14. Dans ce mode de réalisation, soit le piston 36 soit les sondes font le mouvement d'oscillation par rapport à l'extrémité 16a. Il est aussi envisageable que le piston 36 et les sonde 45, 46 fassent le mouvement d'oscillation.

Il est également possible d'utiliser plus de deux sondes, les sondes supplémentaires pouvant être utilisées afin de détecter un dysfonctionnement des sondes principales.

Le dispositif de chromatographie selon l'invention est avantageusement utilisé dans un procédé de séparation par SMB, Simulated Moving Bed (US 2,985,589, US 3,291,726, US 3,268,605 et US 3,266,604 appartenant à UOP, US 5,578,215 et US 5,578,216 appartenant à IFP et NOVASEP, EP 471 082 et EP 563 388 appartenant à DAICEL) ou dans un procédé par VARICOL (US 6,136,198). De tels procédés mettent en oeuvre un ensemble de ces colonnes associées en boucle.

Bien entendu, la présente invention n'est pas limitée aux modes de réalisations décrits à titre d'exemple. Ainsi, les extrémités 16a et 16b de la colonne 12 peuvent être chacune un piston.

## Revendications

1. Dispositif de chromatographie comprenant :
- une colonne (12) destinée à recevoir entre ses deux extrémités (16a, 16b) un lit chromatographique (14) et un fluide à chromatographier,
- un piston (36) coulissant dans la colonne (12), le piston (36) étant une des extrémités (16a, 16b) de la colonne (12),
- des moyens (52) de réglage de la position du piston (36)
**caractérisé en ce que**:
une couche (48) de fluide est délimitée entre une surface du lit (14) et une des extrémités (16a) de la colonne (12),
- le dispositif comprend au moins une première sonde (45, 46) de détection de la surface du lit (14), la sonde (45, 46) étant montée sur l'extrémité (16a) de la colonne (12) délimitant la couche (48),
ledit réglage est fait en fonction de la détection de la surface du lit (14) par la sonde (45, 46).

2. Dispositif selon la revendication 1, **caractérisé en ce que** la sonde (45, 46) est fixe sur l'extrémité (16a)

3. Dispositif selon la revendication 1, **caractérisé en ce que** la sonde (45, 46) est susceptible d'opérer des mouvements d'oscillations par rapport à l'extrémité (16a).

4. Dispositif selon l'une des revendications 1 à 3, **caractérisé en ce que** la sonde (45, 46) est saillante dans la couche (48).

5. Dispositif selon l'une des revendications 1 à 4, **caractérisé en ce que** la sonde (45, 46) est une sonde capacitive.

6. Dispositif selon l'une des revendications 1 à 5, **caractérisé en ce qu'**il comprend en outre une deuxième sonde (46) de détection de la surface du lit (14), la deuxième sonde (46) étant montée sur l'extrémité (16a) de la colonne (12) délimitant la couche (48).

7. Dispositif selon la revendication 6, **caractérisé en ce que** la première sonde (45) est décalée en saillie dans la couche (48) par rapport à la deuxième sonde (46).

8. Ensemble de dispositifs de chromatographie selon l'une des revendications 1 à 7 dans lequel les dispositifs sont associés en boucle.

9. Procédé de séparation d'au moins deux composés d'un fluide à chromatographier comprenant la chromatographie dudit fluide dans le dispositif selon l'une des revendications 1 à 8, le procédé comprenant les étapes :
- écoulement du fluide à chromatographier à travers le lit (14),
- collecte du fluide chromatographié.

10. Procédé selon la revendication 9 lorsque le dispositif est selon l'une des revendications 1 à 5, le piston (36) étant l'extrémité (16a) délimitant la couche (48), le procédé comprenant les étapes :
- écoulement du fluide à chromatographier à travers le lit (14),
- montée du piston (36) lorsque la sonde (45) détecte la surface du lit (14),
- descente du piston (36) lorsque la sonde (45) ne détecte plus la surface du lit (14),
- collecte du fluide chromatographié.

11. Procédé selon la revendication 9 lorsque le dispositif est selon l'une des revendications 1 à 5, le piston (36) étant l'extrémité (16b) inférieure de la colonne (12), le procédé comprenant les étapes :
- écoulement du fluide à chromatographier à travers le lit (14),
- descente du piston (36) lorsque la sonde (45) détecte la surface du lit (14),
- montée du piston (36) lorsque la sonde (45) ne détecte plus la surface du lit (14),
- collecte du fluide chromatographié.

12. Procédé selon la revendication 9 lorsque le dispositif est selon la revendication 6 ou 7, le piston (36) étant l'extrémité (16a) délimitant la couche (48), le procédé comprenant les étapes :
- écoulement du fluide à chromatographier à travers le lit (14),
- montée du piston (36) lorsque les sondes (45, 46) détectent la surface du lit (14),
- descente du piston (36) lorsque aucune sonde (45, 46) ne détecte la surface du lit (14),
- collecte du fluide chromatographié.

13. Procédé selon la revendication 9 lorsque le dispositif est selon la revendication 6 ou 7, le piston (36) étant l'extrémité (16b) inférieure de la colonne (12), le procédé comprenant les étapes :
- écoulement du fluide à chromatographier à travers le lit (14),
- descente du piston (36) lorsque les sondes (45, 46) détectent la surface du lit (14),
- montée du piston (36) lorsque aucune sonde (45, 46) ne détecte la surface du lit (14),
- collecte du fluide chromatographié.

14. Procédé de réglage de la position du piston dans le dispositif selon l'une des revendications 1 à 7, le piston (36) étant l'extrémité (16a) délimitant la couche (48), le procédé comprenant les étapes :
- montée du piston (36) lorsque la sonde (45), lorsque le dispositif est selon l'une des revendications 1 à 5, ou les sondes (45, 46), lorsque le dispositif est selon la revendication 6 ou 7, détectent la surface du lit (14),
- descente du piston (36) lorsque aucune sonde (45, 46) ne détecte la surface du lit (14).

15. Procédé de réglage de la position du piston dans le dispositif selon l'une des revendications 1 à 7, le piston (36) étant l'extrémité (16b) inférieure de la colonne (12), le procédé comprenant les étapes :
- descente du piston (36) lorsque la sonde (45), lorsque le dispositif est selon l'une des revendications 1 à 5, ou les sondes (45, 46), lorsque le dispositif est selon la revendication 6 ou 7, détectent la surface du lit (14),
- montée du piston (36) lorsque aucune sonde (45, 46) ne détecte la surface du lit (14).

16. Procédé de réglage selon la revendication 14 ou 15, lorsque le dispositif est selon l'une des revendications 1 à 5, **caractérisé en ce qu'**il comprend en outre l'étape d'oscillation de la sonde (45).

## Claims

1. Chromatography device comprising:
- a column (12) intended to house, between its two ends (16a, 16b), a chromatographic bed (14) and a fluid to be chromatographed,
- a piston (36) sliding in the column (12), the piston (36) being one of the ends (16a, 16b) of the column (12), means (52) for adjusting the position of the piston (36), **characterized in that** a fluid layer (48) is defined between a surface of the bed (14) and one (16a) of the ends of the column (12);
- the device comprises at least a first probe (45, 46) for detecting the surface of the bed (14), the probe (45, 46) being mounted on the end (16a) of the column (12) defining the layer (48); and
- said adjustment is done as a function of the detection of the surface of the bed (14) by the probe (45, 46).

2. Device according to Claim 1, **characterized in that** the probe (45, 46) is fixed on the end (16a).

3. Device according to Claim 1, **characterized in that** the probe (45, 46) is capable of undergoing oscillatory movements with respect to the end (16a).

4. Device according to one of Claims 1 to 3, **characterized in that** the probe (45, 46) projects into the layer (48).

5. Device according to one of Claims 1 to 4, **characterized in that** the probe (45, 46) is a capacitive probe.

6. Device according to one of Claims 1 to 5, **characterized in that** it furthermore includes a second probe (46) for detecting the surface of the bed (14), the second probe (46) being mounted on the end (16a) of the column (12) defining the layer (48).

7. Device according to Claim 6, **characterized in that** the degree of projection of the first probe (45) into the layer (48) is offset with respect to that of the second probe (46).

8. Combination of chromatography devices according to one of Claims 1 to 7, in which the devices are looped together.

9. Process for separating at least two compounds of a fluid to be chromatographed, comprising the chromatography of the said fluid in the device according to one of Claims 1 to 8, the process comprising the following steps:
- flow of the liquid to be chromatographed through the bed (14); and
- collection of the chromatographed fluid.

10. Process according to claim 9 when the device is according to one of Claims 1 to 5, the piston (36) being the end (16a) defining the layer (48), the process comprising the following steps:
- flow of the fluid to be chromatographed through the bed (14);
- raising of the piston (36) when the probe (45) detects the surface of the bed (14);
- lowering of the piston (36) when the probe (45) no longer detects the surface of the bed (14); and
- collection of the chromatographed fluid.

11. Process according to claim 9 when the device is according to one of Claims 1 to 5, the piston (36) being the lower end (16b) of the column (12), the process comprising the following steps:
- flow of the liquid to be chromatographed through the bed (14);
- lowering of the piston (36) when the probe (45) detects the surface of the bed (14);
- raising of the piston (36) when the probe (45) no longer detects the surface of the bed (14); and
- collection of the chromatographed fluid.

12. Process according to claim 9 when the device is according to Claim 6 or 7, the piston (36) being the end (16a) defining the layer (48), the process comprising the following steps:
- flow of the liquid to be chromatographed through the bed (14);
- raising of the piston (36) when the probes (45, 46) detect the surface of the bed (14);
- lowering of the piston (36) when neither probe (45, 46) detects the surface of the bed (14); and
- collection of the chromatographed fluid.

13. Process according to claim 9 when the device is according to Claim 6 or 7, the piston (36) being the lower end (16b) of the column (12), the process comprising the following steps:
- flow of the fluid to be chromatographed through the bed (14);
- lowering of the piston (36) when the probes (45, 46) detect the surface of the bed (14);
- raising of the piston (36) when neither probe (45, 46) detects the surface of the bed (14); and
- collection of the chromatographed fluid.

14. Method of adjusting the position of the piston in the device according to one of Claims 1 to 7, the piston (36) being the end (16a) defining the layer (48), the method comprising the following steps:
- raising of the piston (36) when the probe (45) where the device is according to one of Claims 1 to 5, or the probes (45, 46) when the device is according to one of Claims 1 to 7, detects the surface of the bed (14); and
- lowering of the piston (36) when neither probe (45, 46) no longer detects the surface of the bed (14).

15. Method of adjusting the position of the piston in the device according to one of Claims 1 to 7, the piston (36) being the lower end (16b) of the column (12), the method comprising the following steps:
- lowering of the piston (36) when the probe (45) where the device is according to one of Claims 1 to 5, or the probes (45, 46) when the device is according to one of Claims 1 to 7, detects the surface of the bed (14); and
- raising of the piston (36) when neither probe (45, 46) no longer detects the surface of the bed (14).

16. Method of adjustment according to Claim 14 or 15, **characterized in that** it furthermore includes the step of oscillating the probe (45).

## Patentansprüche

1. Chromatographievorrichtung, umfassend:
- einen Ständer (12), der dazu bestimmt ist, zwischen seinen zwei Enden (16a, 16b) ein Chromatographiebett (14) und eine Chromatographieflüssigkeit aufzunehmen,
- einen Kolben (36), der in dem Ständer (12) gleitet, wobei der Kolben (36) eines der Enden (16a, 16b) des Ständers (12) ist,
- Mittel (52) zum Einstellen der Position des Kolbens (36), **dadurch gekennzeichnet, dass** eine Fluidschicht (48) zwischen einer Fläche des Betts (14) und einem der Enden (16a) des Ständers (12) abgegrenzt ist,
- wobei die Vorrichtung mindestens eine erste Sonde (45, 46) zum Erfassen der Fläche des Betts (14) umfasst, wobei die Sonde (45, 46) auf dem Ende (16a) des Ständers (12), der die Schicht (48) abgrenzt, installiert ist,
- wobei das Einstellen in Abhängigkeit von dem Erfassen der Fläche des Betts (14) durch die Sonde (45, 46) erfolgt.

2. Vorrichtung nach Anspruch 1, **dadurch gekennzeichnet, dass** die Sonde (45, 46) auf dem Ende (16a) stationär ist.

3. Vorrichtung nach Anspruch 1, **dadurch gekennzeichnet, dass** die Sonde (45, 46) Oszillationsbewegungen in Bezug auf das Ende (16a) ausführen kann.

4. Vorrichtung nach einem der Ansprüche 1 bis 3, **dadurch gekennzeichnet, dass** die Sonde (45, 46) in die Schicht (48) vorsteht.

5. Vorrichtung nach einem der Ansprüche 1 bis 4, **dadurch gekennzeichnet, dass** die Sonde (45, 46) eine Kapazitivsonde ist.

6. Vorrichtung nach einem der Ansprüche 1 bis 5, **dadurch gekennzeichnet, dass** sie ferner eine zweite Sonde (46) zum Erfassen der Fläche des Betts (14) aufweist, wobei die zweite Sonde (46) auf dem Ende (16a) des Ständers (12), der die Schicht (48) abgrenzt, installiert ist.

7. Vorrichtung nach Anspruch 6, **dadurch gekennzeichnet, dass** die erste Sonde (45) in der Schicht (48) in Bezug auf die zweite Sonde (46) vorstehend versetzt ist.

8. Einheit von Chromatographievorrichtungen nach einem der Ansprüche 1 bis 7, bei der die Vorrichtungen in einer Schleife verbunden sind.

9. Verfahren zum Trennen von mindestens zwei Bestandteilen eines zu chromatographierenden Fluids, das die Chromatographie des Fluids in der Vorrichtung nach einem der Ansprüche 1 bis 8 umfasst, wobei das Verfahren die folgenden Schritte aufweist:
- Fließen des zu chromatographierenden Fluids durch das Bett (14),
- Sammeln des chromatographierten Fluids.

10. Verfahren nach Anspruch 9, wenn die Vorrichtung einem der Ansprüche 1 bis 5 entspricht, wobei der Kolben (36) das Ende (16a), das die Schicht (48) abgrenzt, ist, wobei das Verfahren die folgenden Schritte aufweist:
- Fließen des zu chromatographierenden Fluids durch das Bett (14),
- Hub des Kolbens (36), wenn die Sonde (45) die Fläche des Betts (14) erfasst,
- Senken des Kolbens (36), wenn die Sonde (45) die Fläche des Betts (14) nicht mehr erfasst,
- Sammeln des chromatographierten Fluids.

11. Verfahren nach Anspruch 9, wenn die Vorrichtung einem der Ansprüche 1 bis 5 entspricht, wobei der Kolben (36) das untere Ende (16b) des Ständers (12) ist, wobei das Verfahren die folgenden Schritte aufweist:
- Fließen des zu chromatographierenden Fluids durch das Bett (14),
- Senken des Kolbens (36), wenn die Sonde (45) die Fläche des Betts (14) erfasst,
- Hub des Kolbens (36), wenn die Sonde (45) die Fläche des Betts (14) nicht mehr erfasst,
- Sammeln des chromatographierten Fluids.

12. Verfahren nach Anspruch 9, wenn die Vorrichtung einem der Ansprüche 6 oder 7 entspricht, wobei der Kolben (36) das Ende (16a), das die Schicht (48) abgrenzt, ist, wobei das Verfahren die folgenden Schritte aufweist:
- Fließen des zu chromatographierenden Fluids durch das Bett (14),
- Hub des Kolbens (36), wenn die Sonden (45, 46) die Fläche des Betts (14) erfassen,
- Senken des Kolbens (36), wenn keine Sonde (45, 46) die Fläche des Betts (14) erfasst,
- Sammeln des chromatographierten Fluids.

13. Verfahren nach Anspruch 9, wenn die Vorrichtung einem der Ansprüche 6 oder 7 entspricht, wobei der Kolben (36) das untere Ende (16b) des Ständers (12) ist, wobei das Verfahren die folgenden Schritte aufweist:
- Fließen des zu chromatographierenden Fluids durch das Bett (14),
- Senken des Kolbens (36), wenn die Sonden (45, 46) die Fläche des Betts (14) erfassen,
- Hub des Kolbens (36), wenn keine Sonde (45, 46) die Fläche des Betts (14) erfasst,
- Sammeln des chromatographierten Fluids.

14. Verfahren zum Einstellen des Kolbens in der Vorrichtung nach einem der Ansprüche 1 bis 7, wobei der Kolben (36) das Ende (16a) ist, das die Schicht (48) abgrenzt, wobei das Verfahren die folgenden Schritte aufweist:
- Hub des Kolbens (36), wenn die Sonde (45), wenn die Vorrichtung einem der Ansprüche 1 bis 5 entspricht, oder die Sonden (45, 46), wenn die Vorrichtung einem der Ansprüche 6 oder 7 entspricht, die Fläche des Betts (14) erfasst/erfassen,
- Senken des Kolbens (36), wenn keine Sonde (45, 46) die Fläche des Betts (14) erfasst.

15. Verfahren zum Einstellen des Kolbens in der Vorrichtung nach einem der Ansprüche 1 bis 7, wobei der Kolben (36) das untere Ende (16b) des Ständers (12) ist, wobei das Verfahren die folgenden Schritte aufweist:
- Senken des Kolbens (36), wenn die Sonde (45), wenn die Vorrichtung einem der Ansprüche 1 bis 5 entspricht, oder die Sonden (45, 46), wenn die Vorrichtung einem der Ansprüche 6 oder 7 entspricht, die Fläche des Betts (14) erfasst/erfassen.
- Hub des Kolbens (36), wenn keine Sonde (45, 46) die Fläche des Betts (14) erfasst.

16. Einstellverfahren nach Anspruch 14 oder 15, wenn die Vorrichtung einem der Ansprüche 1 bis 5 entspricht, **dadurch gekennzeichnet, dass** es ferner den Oszillationsschritt der Sonde (45) aufweist.
